# EUROPEAN PATENT APPLICATION

(11) **EP 1 785 073 A1**
(43) Date of publication of application: **16.05.2007**
(21) Application number: 06009388.7
(22) Date of filing: 06.05.2006
(51) Int. Cl.: A47J 27/122, A47J 36/06, A47J 36/20, A47J 47/02

(54) **Pot with four chambers for the contemporary cooking of different foods**

(30) Priority: 10.11.2005 IT VA20060062
(71) Applicant: Mastroberti, Rosa, 21037 Lavena Ponte Tresa VA (IT)
(72) Inventor: Mastroberti, Rosa, 21037 Lavena Ponte Tresa VA (IT)
(74) Representative: Sassi, Virginio

(57) **Abstract**

The pot (1) have four chambers (7, 8, 9, 10) with pierced small basket for the contemporary cooking of different foods.

## Description

The present invention relates to a pot with four chambers for the contemporary cooking of different foods.

At the present state of the art of the cook in the families, man use pots with only a chamber for cooking only a food everytime.

As years go by increase the number of the mothers that work out of the home, in factories, in plants, in offices, in hotels, in stores, in various job. They, the mothers, whenever return to home have very much housework to do and little available time. Therefore they have little time even for to cook; while the childs and the members of the family are starving and want immediately the food. Besides, generally the mothers that work out of the home have small kitchenette wich cannot contain many cookers. Therefore with only one or two cookers, if need of cook several foods can not to cook them contemporaneously, but to cook them in turn, first one, then other, then another one and so on. Then the time of stay in the kitchen turn out to be excessively during for mothers that have none.

The invention as claimed is intended to remedy these drawbecks and to offer in addition, various advantages.

It is founded on the principle of carry out a pot with four chambers for the contemporary cooking of different foods.

Merely for the purpose of the simplicity of the explanation, we describe and illustrate only a pot with four chambers for the contemporary cooking of different foods. But we mean that the invention is worth also for pot with two, three or more cooking chambers.

It is founded on the principle of carry out a pot of shape substantially parallelepiped with the corners abundantly rounded and its inside volume subdivided in four chambers by four vertical crossed walls.

With this invention we not only eliminate every above mentioned drawback but we achieve advantages too. In fact disappear the necessity for a big kitchen and many available cookers, because with an only cooker we can simultaneously to cook four foods. Besides we reduce the discomfort for the available little time since we can simultaneously to cook several foods.

These and other advantages of the present invention will be more readily apparent from a consideration of the following detailed description of the drawing illustrating a preferred embodiment of the invention.

Referring to the drawing enclosed shall be described more minutely one of the possible forms of practical carrying out showed to simple title of example.

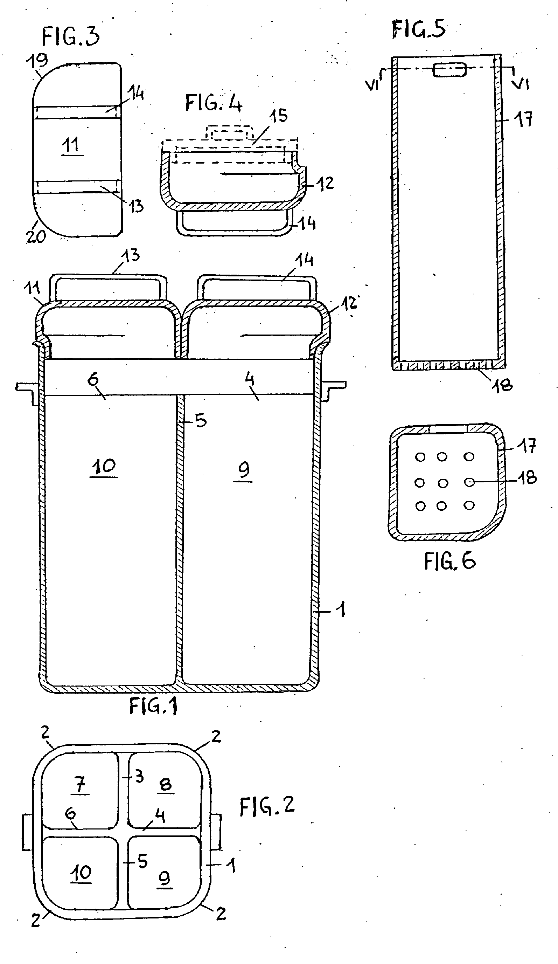

Fig. 1 is a vertical cross-sectional view taken through an ensemble of the pot of the invention, with the top closed by two half-lid.

Fig. 2 is, in more small scale, a plan of the same pot of the fig. 1, but deprived of the two half-lid.

Fig. 3 is an external plan of one of the two half-lid of the pot.

Fig. 4 is a vertical cross-sectional view of one of the two half-lid of the pot; but overturned in such way to act as a tray, covered by another lid, drawed by hatched lines, to act as a device for keeping foods in refrigerant.

Fig. 5 is a vertical cross-sectional view of a pierced small basket containable in one of the cooking chambers of the pot according to the present invention drawed in fig. 1, 2, in order to cooking some foods like as: pasta, rice, vegetables, meat, fruits.

Fig.6 is a plan VI-VI cross-sectional view of the same pierced small basket drawed in fig. 5.

In this figures we note that the pot 1 according to this invention is formed by a food-container substantially parallelepiped of square base but with the four vertical corners 2 abundantly rounded. Four vertical inner walls 3, 4, 5, 6 divide the inner volume of the pot 1 in four cooking chambers 7, 8, 9, 10. In everyone of the aforesaid four cooking chambers we can cooking contemporaneously a different food. The pot 1 has four pierced small basket 17 with holes 18. In the drawing the holes 18 are drawed only in the bottom of the small basket, but obviously also the vertical walls of the small basket can be pierced. The small basket 17 can be made of punched plate, or of wire net.

The mouth of the pot 1 is block up by two half-lid 11, 12 substantially equals. Everyone of the half -lid 11, 12 have a plan substantially rectangular but with two corners 19, 20 abundantly rounded as the corners of the pot 1. Everyone of the half-lid 11, 12 have two long handles 13, 14 fixed near to the respective extremities of the longe sides of the half-lid same. The handles 13, 14 have a double function and the half-lids have a triple function. The first function of the handles 13, 14 is for grasp; the second function is to act as pedestal, of the respective half-lid, when the same half-lid is put down overturned on a level surface.

The first function of every half-lid is to block up half mouth of the pot 1; the second function is, when is put down overturned, to act as a tray to contain foods, for instance to lay down on the table; the third function is to act when the same half-lid is put down overturned, particularly if covered with a lid 15, for preserve foods in a refrigerator.

## Claims

1. Pot caracterised in that has four chambers for the contemporary cooking of different foods.

2. A pot (1), as claimed in claim 1, that comprises a container of shape substantially parallelepiped with the corners abundantly rounded and its inside volume subdivided in four chambers (7, 8, 9, 10) by four vertical crossed walls (3, 4, 5, 6).

3. A pot (1) as claimed in claim1, that comprises a container of a shape substantially parallelepiped with square basis.

4. A pot (1) as claimed in claim 1, that comprises permeable small baskets (17), with holes (18), for contain the foods during the cooking in one or many cooking-chambers (7, 8, 9, 10).

5. A pot (1) as claimed in claim 1, that comprises two half-lids (11) substantially rectangular but with two collateral corners abundantly rounded and two long handles (13, 14) near to the respective extremities of the longe sides of the half-lid same.
